# DEMANDE DE BREVET EUROPEEN

(11) **EP 1 058 014 A1**
(43) Date de publication de la demande: **06.12.2000**
(21) Numéro de dépôt: 00401577.2
(22) Date de dépôt: 05.06.2000
(51) Int. Cl.: F16B 29/00

(54) **Dispositif de fixation par ensemble vis écrou**

(30) Priorité: 04.06.1999 FR 9907072
(71) Demandeur: Renault, 92100 Boulogne Billancourt (FR)
(72) Inventeur: Pancrace, Pascal, 92000 Nanterre (FR)

(57) **Abrégé**

Dispositif de fixation d'une pièce (2) sur un support (1), comprenant un écrou (3) et une vis (4), la vis (4) étant liée à l'écrou (3) de façon à venir serrer la pièce (2) contre le support (1), caractérisé en ce que l'écrou (3) comporte une zone (8) adaptée pour se déformer par cloquage lorsque la tension exercée sur la vis (4) a une valeur comprise dans une plage de valeurs déterminée.

## Description

La présente invention se rapporte au domaine technique des assemblages vissés.

Plus particulièrement, elle concerne un dispositif de fixation d'une pièce sur un support, comprenant un écrou et une vis, la vis étant liée à l'écrou de façon à venir serrer la pièce contre le support.

Il existe de nombreux types de dispositifs de fixation par ensemble, vis-écrou. L'écrou du type extrudé taraudé est obtenu par le poinçonnage d'une tôle en réalisant un percement débouchant, en provoquant ainsi de manière volontaire la formation de bavures formant un bord tombé qui est ensuite taraudé. L'écrou soudé est un écrou en acier fin, généralement de forme carrée, et le plus souvent percé et taraudé. Il peut être soit fixé sur la tôle de support soit sur son renfort. Le mode de fixation le plus courant est la soudure par résistance, par cordon ou par sertissage.

Le principal inconvénient de ces deux dispositifs de fixation est qu'ils présentent un cône d'assemblage, appelé aussi cône de compression, de très faible pente, ce cône représentant la répartition des pressions de contact entre les deux pièces. Il est donc nécessaire d'utiliser plusieurs assemblages vissés de ce type pour obtenir des conditions d'assemblage satisfaisantes.

L'écrou du type plaquette taraudée consiste en un perçage effectué dans une tôle de forte épaisseur, qui est par la suite taraudée. La tôle peut être préassemblée sur une tôle à fixer par soudure par résistance. Ce type d'écrou possède l'avantage de présenter une meilleure répartition des pressions de contact entre les deux pièces de l'assemblage. Par contre, l'emploi d'une plaquette de forte épaisseur peut entraîner un coût important de ce type d'écrou par rapport aux deux autres.

En outre, comme les deux premiers types d'assemblages mentionnés, l'écrou du type plaquette taraudée présente une courbe de tension de la vis, lors du serrage de l'ensemble vis-écrou, en fonction de la déformation de la vis qui est sensiblement linéaire et suivie presque immédiatement par la rupture de la vis. Pratiquement, l'accès à la valeur de la tension de la vis de l'ensemble vis-écrou n'étant pas aisé, le serrage est contrôlé au moyen du couple de serrage exercé sur cette vis dont la valeur est facilement déterminable. La relation entre le couple de serrage et la tension de la vis est empirique. On détermine un couple de serrage qui correspond à une tension de vis souhaitée pour les conditions de serrage recherchées. Néanmoins, la valeur exacte de cette tension de vis ne peut être connue de façon simple, et les écarts entre chaque écrou font que, pour un couple de serrage donné, la valeur de la tension de la vis réellement obtenue peut sensiblement s'éloigner de la valeur « théorique » idéale de tension recherchée.

Il apparaît donc avantageux de pouvoir contrôler le serrage de l'ensemble vis-écrou, de façon simple et précise, directement par la tension de la vis, en particulier de pouvoir déterminer, de façon simple et précise, lorsqu'une valeur de tension de vis, correspondant aux conditions de serrage souhaitées, est atteinte.

L'invention vise à obtenir un écrou, de conception économique, offrant à la fois une bonne répartition des pressions de contact entre les pièces à assembler et permettant de déterminer de façon simple et précise qu'une valeur seuil de tension de vis est atteinte.

Dans ce but elle propose un dispositif de fixation d'une pièce sur un support, comprenant un écrou et une vis, la vis étant liée à l'écrou de façon à venir serrer la pièce contre le support, caractérisé en ce que l'écrou comporte une zone adaptée pour se déformer par cloquage lorsque la tension exercée sur la vis a une valeur comprise dans une plage de valeurs déterminée.

Selon une autre caractéristique de l'invention, la tension exercée sur la vis, pour laquelle le cloquage de l'écrou est obtenu, est sensiblement égale à la tension de vis correspondant aux conditions de serrage du dispositif.

Selon une autre caractéristique de l'invention, l'écrou comporte un alésage, d'axe F, au moins en partie taraudé, adapté pour coopérer avec un filetage porté par la vis.

Selon une autre caractéristique de l'invention, la zone, adaptée pour se déformer par cloquage, est située autour de l'alésage.

Selon une autre caractéristique de l'invention, la zone, adaptée pour se déformer par cloquage, correspond sensiblement à une portion de sphère, de cône, ou d'ellipsoïde.

Selon une autre caractéristique de l'invention, la zone, adaptée pour se déformer par cloquage, est limitée, à une de ses extrémités, par une partie sensiblement conique, d'axe F.

Selon une autre caractéristique de l'invention, l'écrou comporte une partie extrudée dans laquelle est réalisé l'alésage.

Selon une autre caractéristique de l'invention, l'écrou comporte une base, supportant la partie conique, et en contact avec le support.

Selon une autre caractéristique de l'invention, la base de l'écrou est intégrée au support.

D'autres caractéristiques et avantages de l'invention apparaîtront à la lecture de la description qui va suivre en référence aux dessins dans lesquels :
- la figure 1 représente une vue en coupe partielle du dispositif selon l'invention, avant le cloquage de l'écrou,
- la figure 2 représente une vue en coupe partielle du dispositif selon l'invention, l'écrou ayant cloqué,
- la figure 3 représente, de façon schématique, la tension exercée sur une vis en fonction de sa déformation pour les assemblages vissés de l'art antérieur,
- la figure 4 représente, de façon schématique, la tension exercée sur une vis en fonction de sa déformation pour le dispositif selon l'invention.

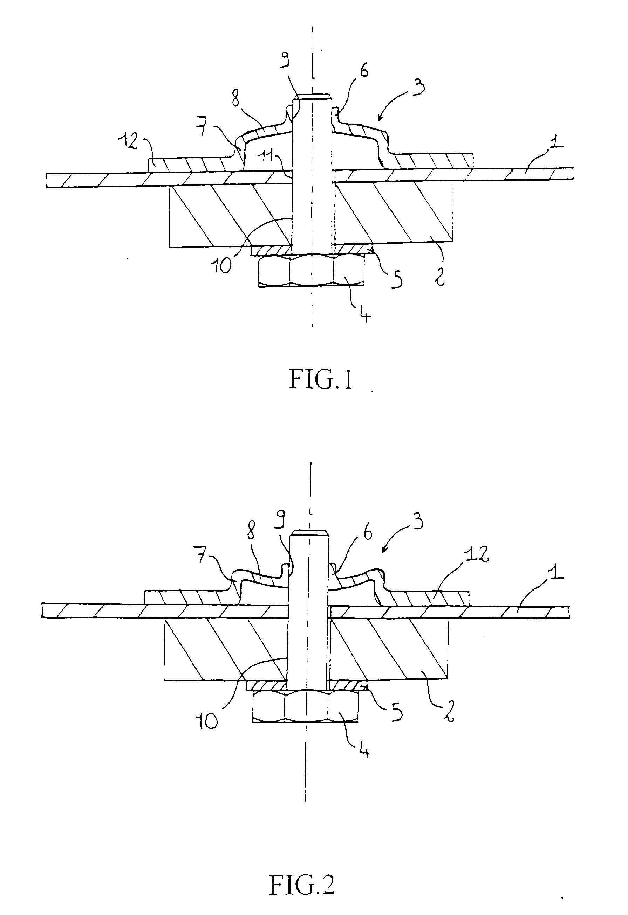

La figure 1 représente une tôle 1 de support sur laquelle on souhaite fixer une pièce 2. Le dispositif de fixation selon l'invention comprend un écrou 3, et une vis filetée 4. Les deux pièces 1,2 comportent chacune un alésage 10,11 permettant le passage de la vis filetée 4. Une rondelle 5 peut être placée entre la tête de la vis 4 et la pièce 2 à fixer.

L'écrou 3, tel que représenté sur la figure 1, comporte un alésage taraudé 9, d'axe F, réalisé dans une partie extrudée 6. Autour de la partie extrudée 6, s'étend une zone de cloquage 8 correspondant sensiblement à une portion de sphère dont le centre appartient à l'axe F. Le rayon de la zone de cloquage 8, Rₛ, ainsi que son épaisseur, Eₛ, le diamètre, D_{s,} du disque correspondant à la projection de la zone de cloquage 8 sur un plan perpendiculaire à l'axe F, sont les paramètres caractérisant cette zone 8.

Dans des variantes de l'invention, la zone de cloquage 8 peut aussi correspondre à une portion de cône, qui sera alors caractérisée par le diamètre D1_{c} de sa base, celui D2_{c} de son sommet, sa hauteur H_{c} et son épaisseur E_{c}. Enfin, la zone 8 peut correspondre, de façon plus générale, à une portion d'un ellipsoïde. Par la suite, nous considérerons la zone 8 comme correspondant sensiblement à une portion de sphère.

La zone de cloquage 8 est limitée par une partie sensiblement cylindrique 7. La partie cylindrique 7 repose sur une base 12, sensiblement plane, venant en appui sur la tôle 1. Cette base 12 peut être fixée sur la tôle 1 par n'importe quel moyen connu, par exemple, par soudure par résistance ou par cordon. En particulier, l'écrou 3 peut être directement intégré à la tôle 1. Dans ce cas, la base 12 et la tôle 1 sont confondus.

La zone de cloquage 8, ainsi que la partie cylindrique 7, peuvent être réalisés par emboutissage à chaud ou à froid.

La fixation de la pièce 2 sur la tôle 1 est réalisée de la façon suivante. La vis 4 prenant en sandwich la pièce 2 et la tôle 1 est vissée sur l'écrou 3. Au fur et à mesure du vissage, la valeur de la tension dans la vis 4 augmente. La vis 4 exerce une force de traction sur l'écrou au niveau du filetage de l'alésage 9. Cette force est transmise à la zone de cloquage 8.

Une propriété des tôles fines élancées est de cloquer lorsqu'une force d'amplitude suffisante est exercée perpendiculairement à leur surface. Le cloquage est un phénomène bidimensionnel qui correspond à un phénomène unidimensionnel de flambage particulier. Lorsqu'on exerce une force sur une tôle mince élancée, la déformation résultante de la tôle est liée à l'amplitude de la force par une relation particulière, la raideur de la tôle correspondant au rapport entre l'amplitude de la force appliquée et la déformation de la tôle associée. Dans le domaine élastique, cette relation est linéaire, la raideur de la tôle étant alors constante.

La zone de cloquage d'une tôle mince élancée correspond à des déplacements importants de la tôle alors que la force appliquée sur celle-ci varie peu, voire même diminue. La raideur de la tôle dans la zone de cloquage est beaucoup plus faible que celle de la zone élastique. Lorsque la tôle mince a cloqué, la relation entre la force appliquée sur celle-ci et le déplacement associé redevient à nouveau sensiblement linéaire, jusqu'à la limite du domaine élastique. Le phénomène de cloquage est réversible donc élastique.

La figure 2 représente l'allure générale du dispositif selon l'invention lorsque l'écrou 3 a cloqué. Seule la zone de cloquage 8 s'est visiblement déformée. Il apparaît en fait, qu'après le cloquage, la zone 8 conserve la forme d'une portion de sphère, dont le rayon est sensiblement du même ordre que Rₛ, mais dont la concavité s'est inversée. De même, lorsque la zone de cloquage 8 est une portion de cône ou d'ellipsoïde, elle conserve, après cloquage, sa forme d'ensemble et les caractéristiques associées.

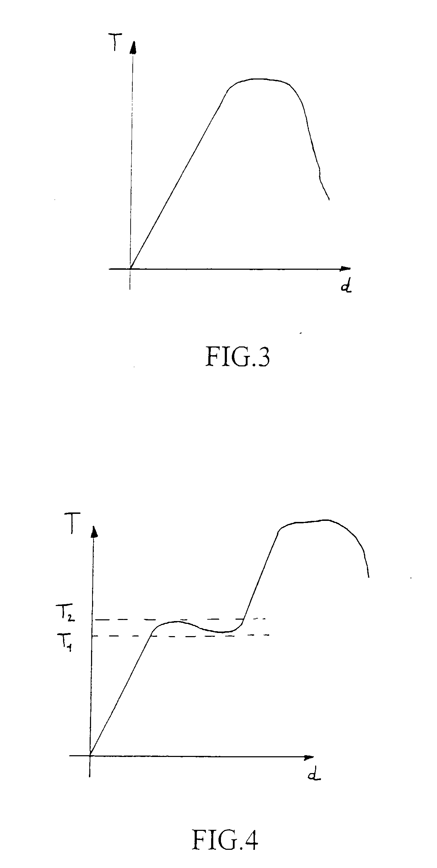

Les figure 3 et 4 représentent chacune une courbe représentative de la tension, T, présente dans une vis, d'un ensemble vis-écrou, en fonction de sa déformation, d, lors du serrage d'un assemblage vissé. La vis est mise en tension par la force exercée par la pièce sur la tête de la vis, et la force exercée par l'écrou sur le filetage de la vis. Cette dernière force étant opposée à la force exercée par la vis sur l'écrou, il apparaît que la tension de la vis est directement liée au comportement de l'écrou.

La pente de la courbe obtenue correspond à la raideur de la vis. La figure 3 représente une telle courbe pour un système classique d'assemblages vissés, tels que, par exemple, ceux décrits précédemment. Il apparaît de façon remarquable que la relation entre la tension de la vis et sa déformation est sensiblement linéaire jusqu'à une certaine valeur de tension, au delà de laquelle il y a zone plastique et chute de la valeur de la tension jusqu'à la rupture.

La figure 4 représente la même courbe pour un dispositif de fixation selon la présente invention. La relation entre la tension T de la vis, et sa déformation, d, est, dans une première partie, sensiblement linéaire. La raideur de la vis est alors constante. Puis, pour une valeur de tension de vis supérieure à T₁, la raideur chute pour osciller autour de la valeur nulle, puis augmente pour atteindre une valeur constante positive pour une tension de vis supérieure à T₂. La relation entre la tension, T, de la vis et sa déformation, d, redevient linéaire, pour une tension de vis supérieure à T₂. Comme pour la figure 3, pour une tension supérieure à une valeur donnée, il y a une zone de déformation plastique suivie de la rupture de la vis.

La courbe représentative de la tension de vis en fonction de sa déformation est donc tout d'abord rectiligne, devient concave, puis convexe, et à nouveau rectiligne avant la rupture de la vis.

La zone où la concavité de la courbe s'inverse correspond au cloquage de l'écrou. Pendant ce phénomène, la traction exercée par l'écrou sur la vis varie peu, ce qui correspond à une tension de la vis elle aussi relativement stable, alors que la déformation de la vis continue, elle, à augmenter. Lorsque le phénomène de cloquage est achevé, l'écrou reprend un comportement habituel, ce qui correspond à une relation entre la tension de vis et sa déformation à nouveau linéaire.

Il apparaît donc, pendant le serrage de la vis, une zone pour laquelle la tension de vis varie très peu, bien que sa déformation continue à croître de façon importante. Cette zone de cloquage de l'écrou apparaît pour des valeurs de tensions de vis déterminées et qui dépendent de la géométrie de l'écrou, en particulier des paramètres Rₛ, Eₛ, et Dₛ. Il est ainsi possible de choisir ces paramètres de façon à ce que la tension de vis, correspondant aux conditions de serrage recherchées, soit comprise entre T₁ et T₂. Dans ce cas, lorsque le cloquage de l'écrou se produit, on sait que l'on est parvenu à une valeur de tension de vis proche de celle recherchée. Comme la zone de cloquage s'étend pour des déformations de vis importantes, la tolérance relative à l'obtention de la tension optimale de serrage de la vis est grande. L'écrou cloquant permet ainsi d'arrêter la procédure de serrage avec la certitude d'avoir atteint la condition optimum de tension dans la vis.

Le cloquage de l'écrou se traduit par une onde sonore qui peut être plus ou moins perceptible. Dans la pratique, la tension de vis n'étant pas facilement accessible, on contrôle le serrage par le couple de serrage appliqué à la vis. Dans le cas où l'onde sonore émise durant le cloquage est nettement perceptible, il n'est même pas nécessaire de contrôler le couple de serrage. Dans le cas contraire, un moyen de contrôle du couple de serrage fera apparaître une zone, facilement repérable, où le couple évolue peu, zone correspondant au cloquage de l'écrou, et qui assurera que les conditions optimales de serrage sont atteintes.

La base de l'écrou cloquant n'intervient pas dans le phénomène de cloquage, elle peut donc avoir une forme quelconque. En particulier, elle peut dépendre des conditions de montage et de positionnement de l'écrou sur la tôle de support. Le cône d'assemblage repose sur l'extrémité de la partie conique de l'écrou reliée à la base. Il est donc très large et assure une bonne répartition des pressions de contact entre la tôle et la pièce à fixer, et permet ainsi une bonne reprise des moments..

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

Ainsi, la partie supportant la zone de cloquage peut-elle présenter une forme autre que conique. En effet, elle peut correspondre à un tronc de cône, ou même présenter une forme plus complexe dans le cas où la zone de cloquage est une portion d'ellipsoïde.

## Revendications

1. Dispositif de fixation d'une pièce (2) sur un support (1), comprenant un écrou (3) et une vis (4), la vis (4) étant liée à l'écrou (3) de façon à venir serrer la pièce (2) contre le support (1), caractérisé en ce que l'écrou (3) comporte une zone (8) adaptée pour se déformer par cloquage lorsque la tension exercée sur la vis (4) a une valeur comprise dans une plage de valeurs déterminée.

2. Dispositif de fixation d'une pièce (2) sur un support (1) selon la revendication 1, caractérisé en ce que la tension exercée sur la vis (4), pour laquelle le cloquage de la zone (8) de l'écrou (3) est obtenu, est sensiblement égale à la tension de vis correspondant aux conditions de serrage du dispositif.

3. Dispositif de fixation d'une pièce (2) sur un support (1) selon l'une des revendications 1 ou 2, caractérisé en ce que l'écrou (3) comporte un alésage (9), d'axe F, au moins en partie fileté, adapté pour coopérer avec un filetage porté par la vis (4).

4. Dispositif de fixation d'une pièce (2) sur un support (1) selon l'une des revendications 1 à 3, caractérisé en ce que la zone (8), adaptée pour se déformer par cloquage, est située autour de l'alésage (9).

5. Dispositif de fixation d'une pièce (2) sur un support (1) selon l'une des revendications 1 à 4, caractérisé en ce que la zone (8), adaptée pour se déformer par cloquage, correspond sensiblement à une portion de sphère.

6. Dispositif de fixation d'une pièce (2) sur un support (1) selon l'une des revendications 1 à 4, caractérisé en ce que la zone (8), adaptée pour se déformer par cloquage, correspond sensiblement à une portion de cône.

7. Dispositif de fixation d'une pièce (2) sur un support (1) selon l'une des revendications 1 à 4, caractérisé en ce que la zone (8), adaptée pour se déformer par cloquage, correspond sensiblement à une portion d'ellipsoïde.

8. Dispositif de fixation d'une pièce (2) sur un support (1) selon l'une des revendications 1 à 7, caractérisé en ce que l'écrou (3) comporte une partie extrudée (6) dans laquelle est réalisé l'alésage (9).

9. Dispositif de fixation d'une pièce (2) sur un support (1) selon l'une des revendications 1 à 8, caractérisé en ce que la zone (8), adaptée pour se déformer par cloquage, est limitée, à une de ses extrémités, par une partie sensiblement cylindrique (7), d'axe F, supportée par une base (12), en contact avec le support (1).

10. Dispositif de fixation d'une pièce (2) sur un support (1) selon la revendication 9, caractérisé en ce que la base (12) de l'écrou (3) est intégrée au support (1).
